# EUROPEAN PATENT APPLICATION

(11) **EP 4 091 863 A1**
(43) Date of publication of application: **23.11.2022**
(21) Application number: 21214214.5
(22) Date of filing: 14.12.2021
(51) Int. Cl.: B60L 53/16, H01R 31/06, H01R 13/52, H01R 13/66, H01R 13/41

(54) **CHARGING BASE WITH REPLACEABLE TERMINAL ELEMENT FOR ELECTRIC VEHICLE**

(30) Priority: 21.05.2021 CN 202121100765 U
(71) Applicant: Wanbang Digital Energy Co., Ltd., Changzhou, Jiangsu (CN); Wanbang Star Charge Technology Ltd., Changzhou, Jiangsu (CN)
(72) Inventor: Xu, Biao, Changzhou (CN); CHEN, CHIEH-KAI, Changzhou (CN); Li, Pengyun, Changzhou (CN)
(74) Representative: Sun, Yiming

(57) **Abstract**

A charging base with a replaceable terminal element for an electric vehicle includes a fixing component (11) and a replaceable terminal element(12) that cooperate with each other. A DC replaceable terminal assembly(3) includes a plastic sheath(5), insertion grooves (6) and a sheath base (8) connected to each other. A terminal(7) is connected inside each of the insertion grooves (6). The sheath base(8) is connected to the fixing component (11). A lower part of the terminal(7) is provided with a knurled structure(7a), and a lower end of the terminal is connected to the jack socket (2) of the fixing component(11). A bottom part of the sheath base (8) is provided with a waterproof groove (8b) and a terminal protection ring (8d). A sealing gasket (9) is connected in the waterproof groove(8b), and has through holes(9a).

## Description

### Field of the Disclosure

The disclosure relates to the technical field of electric vehicle charging, in particular to a charging base with replaceable terminal element for an electric vehicle.

### Description of Related Art

Nowadays, the required service life for a charging interface is 10,000 times, the charging voltage is as high as 1000V, and the charging current is as high as 200A, or even higher. In the operation process, the charging gun is frequently plugged in and unplugged from the terminals and sheath of the charging base, and therefore the terminals and sheath are very easily damaged or burned. Currently, when the charging base available on the market is damaged, it is necessary to replace harness components of the entire set of charging base, which results in high costs for after-sales maintenance and considerable waste.

A patent with application number CN201920260226.3 discloses a quick-plug and detachable DC charging base for an electric vehicle. Specifically, the applicant of the above patent disassembles the terminal of the charging base into a movable segment5-2 of a connection terminal, a fixed terminal assembly 4 and a fixed segment 5-1 of the connection terminal. The movable segment 5-2 of the connection terminal is connected in a front cover 10, so that the DC charging base is turned into a detachable structure, which is convenient for subsequent replacement. A patent with application number CN202020062735.8 discloses a DC charging socket for an electric vehicle that can be quickly disassembled and assembled. Specifically, the applicant of the above patent disassembles the terminal of the charging base into a fragile terminal detachable element 520, a signal terminal 4 and a fragile terminal fixing part 510. The fragile terminal detachable element 520 is connected in a detachable body 202 of the socket to facilitate subsequent replacement. However, in both of the two abovementioned patents, terminal is disassembled into multiple parts and is then re-assembled. Although this method can be used to replace the damaged parts one by one, due to the large number of disassembled parts, the connection between the elements is not close enough. Meanwhile, disassembling too many parts will cause a large dimensional tolerance between the parts, and therefore it cannot be ensured that the position of the terminal part meets the standard. Besides, the position of the terminal that is out of tolerance will cause an increase in the force applied for plugging and unplugging, which will cause the parts to be worn severely.

### SUMMARY OF THE DISCLOSURE

The purpose of the disclosure is to solve the problems of existing charging base, such as high maintenance cost, complicated replacement, low safety and low water resistance that occur after damage of the charging base. The disclosure provides a charging base with replaceable terminal element for an electric vehicle, and the charging base adopts an integrated structure. The charging base is detachable and can also effectively improve its waterproof performance, reduces the number of parts when repair is required to fix the vulnerable parts of the charging base, reduces the difficulty of repair operations, and makes replacement more efficient and convenient.

In order to achieve the above purpose, the disclosure adopts the following technical solutions. A charging base with replaceable terminal element for an electric vehicle includes a charging base body. The charging base body includes a fixing component and a replaceable terminal element that cooperate with each other. The fixing component is provided with a set of jack sockets for connecting charging wires. The replaceable terminal element includes a DC replaceable terminal assembly and an AC replaceable terminal assembly, to satisfy the use of DC charging or AC charging.

The DC replaceable terminal assembly includes a plastic sheath. The plastic sheath has insertion grooves provided therein. A terminal is connected inside each of the insertion grooves. The plastic sheath and the insertion grooves are both connected to the sheath base. The sheath base and an opening at an upper end of the fixing component cooperate with each other, so as to closely connect the replaceable terminal element and the fixing component.

A lower part of the terminal is provided with a knurled structure, which is arranged at a position where the terminal and the sheath base are connected, to increase the strength of injection molding.

An upper part of the terminal is arranged in each of the insertion grooves, and a lower end of the terminal passes downwards through the sheath base and is connected to a respective one of the jack sockets in the fixing component.

A circle of mounting holes are disposed on the sheath base, and an anti-theft screw is correspondingly connected in each of the mounting holes to fix the replaceable terminal element and the fixing component.

A bottom part of the sheath base is further provided with a waterproof groove, a pair of terminal protection rings are fixed in the waterproof groove, and the terminal protection rings are respectively sleeved at the bottom parts of the terminals. A sealing gasket is connected in and matches the waterproof groove. The sealing gasket has through holes respectively matching the terminals, so that the terminals can pass downwards through the sealing gasket and are respectively connected to the jack sockets.

A configuration of the AC replaceable terminal assembly is as same as that of the DC replaceable terminal assembly.

Further, the insertion grooves are all cylindrical structures, a bottom part of each of the insertion grooves is connected to the sheath base, and an outer side of each of the insertion grooves is connected to the plastic sheath.

Further, an axis of the terminal and an axis of a corresponding one of the insertion grooves coincide with each other.

Further, the waterproof groove is matched with a sealing gasket, and the sealing gasket can be suitably embedded in the waterproof groove to increase the waterproof performance of the overall structure.

Further, a temperature sensor is provided on one side of the jack sockets of the fixing component for real-time monitoring of the temperature rise of the terminals, thereby facilitating timely adjustment, and ensuring charging safety.

Compared with the conventional technology, the advantages of the disclosure are specifically as follows.
(1) The charging base includes a replaceable terminal element and a fixing component. The replaceable terminal element includes replaceable terminals and a plastic fixing member. The replaceable terminals are fixed in the plastic member through injection molding. The fixing component is provided with jack sockets respectively connected to the replaceable terminals at the front ends. The jack sockets are connected to the wires of the harness of the charging base.
(2) The replaceable terminal element and the fixing component of the charging base are connected in a detachable manner. When the plastic member of the terminals or the fixing base is worn or burned, it is only required to use a simple tool to remove the replaceable terminal element, and the damaged terminal part can be replaced. Therefore, there is no need to replace other parts of the charging base, on-site maintenance can be realized, the implementation is simple and convenient, and all terminals can be replaceable.
(3) The replaceable terminal assembly includes two parts, DC replaceable terminal assembly and AC replaceable terminal assembly. Both of the replaceable terminal assemblies can be replaced separately. The terminals in the replaceable terminal element are designed with a knurled structure to strengthen the strength of injection molding for terminals.
(4) The replaceable terminal is fixed in the plastic member through injection molding, making it an integral part, which not only reduces the number of parts when repair is required to fix the vulnerable parts of the charging base, reduces the difficulty of maintenance operation, but also improves the waterproof performance at the region where the terminal and the plastic member are fixed together. Injection molding can also improve the matching accuracy of the terminal and the plastic.
(5) Anti-theft screws are adopted to connect and fix the replaceable terminal element and the fixing part of the charging base. Special tools must be used for disassembling to prevent accidents from being caused by non-professional maintenance personnel when performing disassembly by themselves, so as to improve the safety of disassembly.
(6) The sealing gasket is provided between the replaceable terminal element and the fixing component, and this increases the overall waterproof and sealing performance of the product, avoids malfunctions such as equipment failure caused by water seepage, and maintains normal operation of the equipment.
(7) The temperature sensor is arranged in the socket region where the wires are connected, to monitor the temperature rise of the terminal in real time, and transmit the collected temperature information to the charging control system, which makes it convenient for real-time adjustment of the charging power to reduce the temperature.

### BRIEF DESCRIPTION OF THE DRAWINGS

FIG. 1 is an exploded view of a charging base of a replaceable terminal element for an electric vehicle of the disclosure.
FIG. 2 is a three-dimensional view of a direct current replaceable terminal assembly of the disclosure.
FIG. 3 is an exploded view of the direct current replaceable terminal assembly of the disclosure.
FIG. 4 is a structural view of the direct current replaceable terminal assembly of the disclosure.
FIG. 5 is a structural view of a terminal of the disclosure.
FIG. 6 is a three-dimensional view of jack sockets of the disclosure.
FIG. 7 is a three-dimensional view of a sealing gasket of the disclosure.
FIG. 8 is a three-dimensional view of an alternating current replaceable terminal assembly of the disclosure.
FIG. 9 is an exploded view of the alternating current replaceable terminal assembly of the disclosure.

### DESCRIPTION OF EMBODIMENTS

### Embodiment 1

In order to make the disclosure more comprehensible, the charging base of a replaceable terminal element for an electric vehicle of the disclosure will be further described below with reference to the accompanying drawings. The specific embodiments described here are only used to explain the disclosure, and are not intended to limit the disclosure.

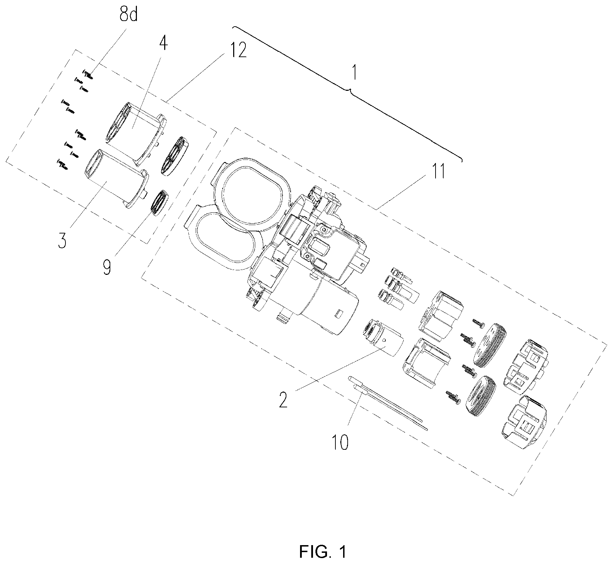

Referring to FIG. 1, a charging base of replaceable terminal element for an electric vehicle includes a charging base body 1. The charging base body 1 includes a fixing component 11 and a replaceable terminal element 12 that cooperate with each other.

The fixing component 11 is provided with a set of jack sockets 2 for connecting charging wires. The replaceable terminal element 12 includes a direct current (DC) replaceable terminal assembly 3 and an alternating current (AC) replaceable terminal assembly 4 to satisfy the use of DC charging or AC charging.

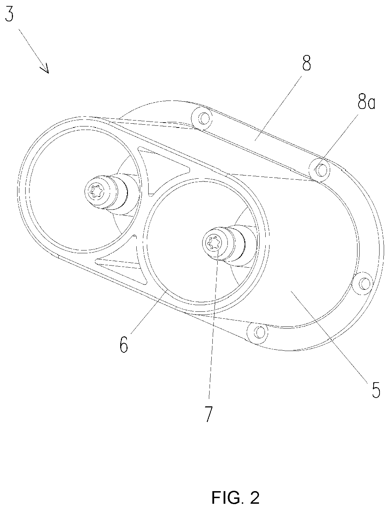

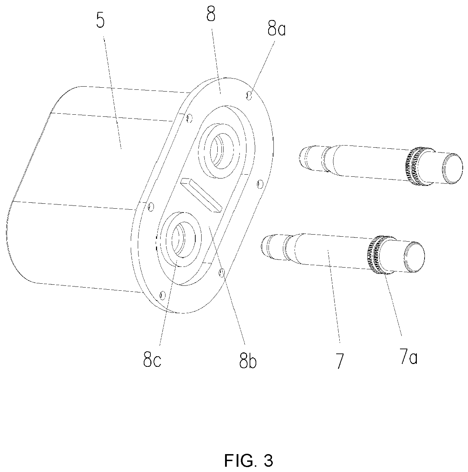

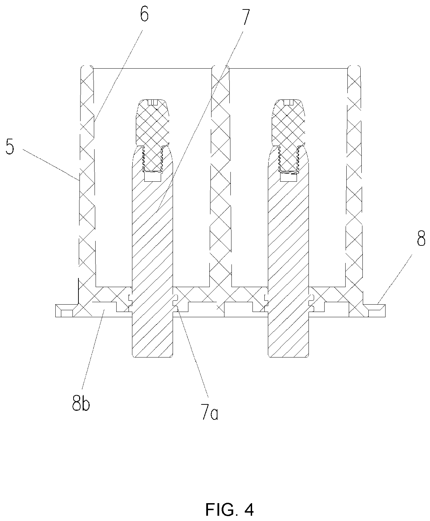

Referring to FIG. 1 to FIG. 4, the DC replaceable terminal assembly 3 includes a plastic sheath 5 having a pair of cylindrical insertion grooves 6 provided therein. A terminal 7 is connected in each of the insertion grooves 6. An axis of the terminal 7 coincides with an axis of the corresponding insertion groove 6.

The plastic sheath 5 and the insertion grooves 6 are both connected to the sheath base 8. The sheath base 8 and an opening at an upper end of the fixing component 11 cooperate with each other, so as to closely connect the replaceable terminal element 12 and the fixing component 11.

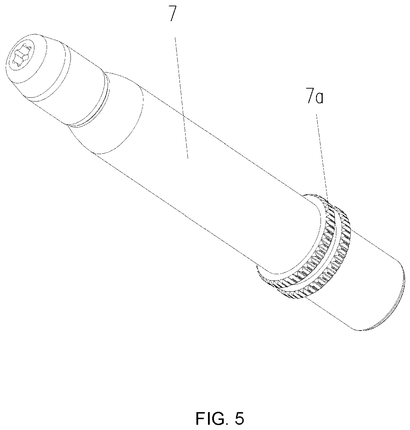

Referring to FIG. 5, a lower part of the terminal 7 is provided with a pair of knurled structures 7a, which are arranged at a position where the terminal 7 and the sheath base 8 are connected to increase the strength of injection molding.

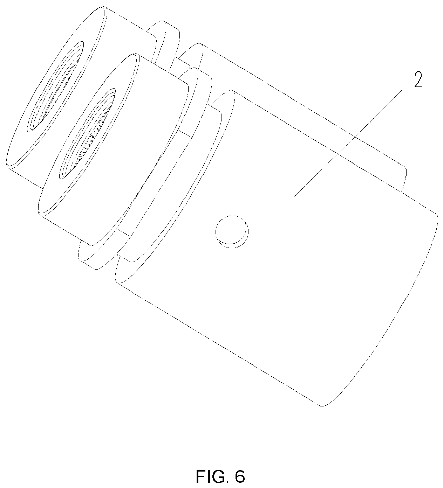

Referring to FIG. 1, FIG. 4 and FIG. 6, an upper part of the terminal 7 is arranged in each of the insertion grooves 6, and a lower end of the terminal 7 passes downwards through the sheath base 8 and is connected to a respective one of the jack sockets 2 in the fixing component 11.

Referring to FIG. 1, FIG. 2 and FIG. 3, a circle of mounting holes 8a are disposed on the sheath base 8, and an anti-theft screw 8d is correspondingly connected in each of the mounting holes 8a to fix the replaceable terminal element 12 and the fixing component 11.

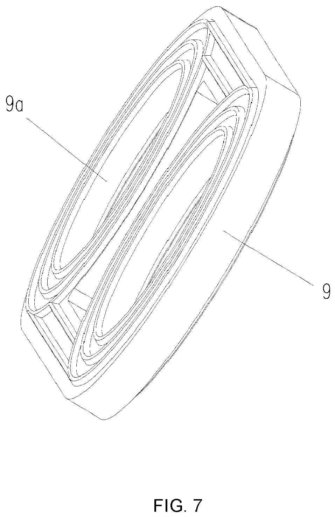

Referring to FIG. 1, FIG. 3 and FIG. 7, the bottom part of the sheath base 8 is further provided with a waterproof groove 8b. A pair of terminal protection rings 8c are fixed in the waterproof groove 8b, and the terminal protection rings 8c are respectively sleeved at the bottom parts of the terminals 7. A sealing gasket 9 is connected in and matches the waterproof groove 8b. The sealing gasket 9 has through holes 9a respectively matching the terminals 7, so that the terminals 7 can pass downwards through the sealing gasket 9 ,and are respectively connected to the jack sockets 2.

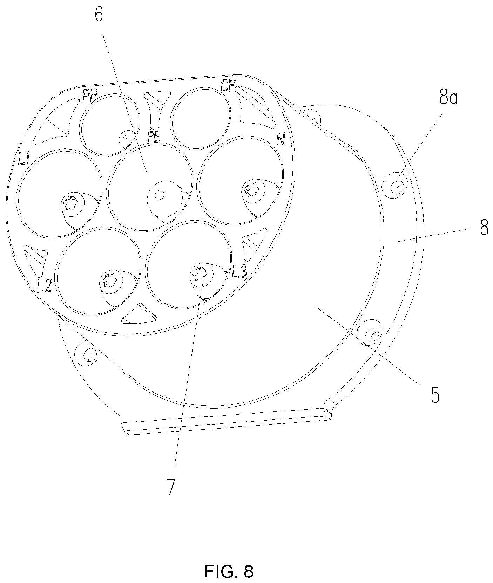

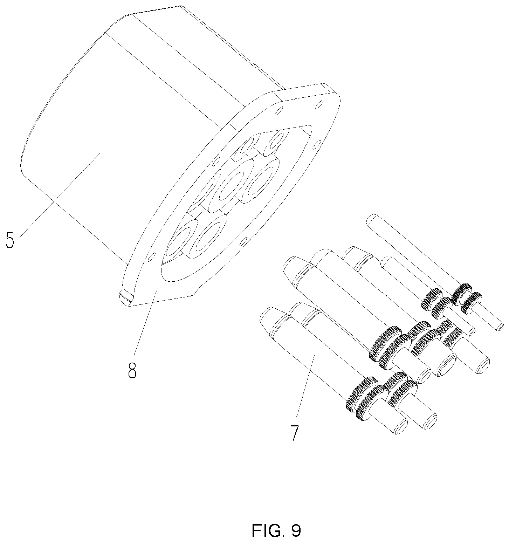

Referring to FIG. 8 and FIG. 9, the configuration of the AC replaceable terminal assembly 4 is the same as that of the DC replaceable terminal assembly 3.

Referring to FIG. 1, a temperature sensor 10 is provided on one side of the jack sockets 2 of the fixing component 11 for real-time monitoring of the temperature rise of the terminal 7, thereby facilitating timely adjustment, and ensuring charging safety.

In the disclosure, the charging base body 1 is divided into two parts, one part is the fixing component 11, which is used as a configuration support and a connecting member; the other part is the replaceable terminal element 12, which serves as a front-end fixing member of the replaceable terminals. When the terminal is damaged during use, the entire terminal element can be removed with a simple tool from the front end of the charging base. Specifically, the insertion grooves 6 outside the terminals 7 are fixed in the plastic sheath 5. The insertion grooves 6 are also made of plastic material and are molded together with the plastic sheath 5. The tail part of each terminal 7 is connected to the corresponding jack socket 2 in the fixing component 11 of the charging base, and the plug-hole is further connected to the wire at the tail of the charging base. When the contact part of each terminal in the replaceable terminal element is burned or damaged, it is only required to disassemble the replaceable terminal element from the front end of the charging base and replace the damaged replaceable terminal element, thereby realizing the maintenance operation of the charging base without disassembling other parts of the vehicle. The terminal of charging base can be replaced on site without disassembling the wire harness element of the entire charging base, thus the operation is simple and convenient.

In the disclosure, the replaceable terminal element of the charging base is composed of the terminals and the plastic sheath, and the insertion grooves for the terminals are fixed in the plastic sheath through injection molding. The sealing gasket is further provided between the replaceable terminal element and the fixing component, which further prevents water vapor from entering the internal wiring region of the charging base.

The temperature sensor is arranged at the internal terminal wiring part of the charging base to monitor the temperature rise of the terminals in real time, and transmit the collected temperature information to the electric vehicle control system to facilitate real-time adjustment of the charging power and prevent accidents caused by high temperature.

In addition to the above-mentioned embodiments, the disclosure can also have other implementations. All technical solutions formed by equivalent replacements or equivalent transformations fall within the scope to be protected by the disclosure.

## Claims

1. A charging base for an electric vehicle, the charging base comprising a charging base body (1) which comprises a fixing component (11) and a replaceable terminal element(12) that cooperate with each other, wherein
the fixing component(11) is provided with a set of jack sockets (2), the replaceable terminal element (12) comprises a direct current replaceable terminal assembly (3) and an alternating current replaceable terminal assembly (4);
the direct current replaceable terminal assembly (3) comprises a plastic sheath (5), and the plastic sheath (5) has insertion grooves (6) provided therein, a terminal(7) is connected inside each of the insertion grooves (6), the plastic sheath and the insertion grooves (6) are both connected to a sheath base (8), the sheath base (8) and an opening at an upper end of the fixing component (11) cooperate with each other;
a lower part of the terminal (7) is provided with a knurled structure(7a), which is arranged at a position where the terminal (7) and the sheath base (8) are connected;
an upper part of the terminal (7) is arranged in each of the insertion grooves (6), and a lower end of the terminal (7) passes downwards through the sheath base (8) and is connected to a respective one of the jack socket (2) in the fixing component (11);
a circle of mounting holes (8a) are disposed on the sheath base (8), and an anti-theft screw (8d) is correspondingly connected in each of the mounting holes (8a);
a bottom part of the sheath base(8) is further provided with a waterproof groove(8b), a pair of terminal protection rings(8d) are fixed in the waterproof groove (8b), and the terminal protection rings(8d) are respectively sleeved at bottom parts of the terminals(7), a sealing gasket(9) is connected in and matches the waterproof groove (8b), the sealing gasket(9) has through holes (9a) respectively matching the terminals (7);
a configuration of the alternating current replaceable terminal assembly(4) is as same as that of the direct current replaceable terminal assembly (3).

2. The charging base for the electric vehicle according to claim 1, wherein the insertion grooves (6) are all cylindrical structures, a bottom part of each of the insertion grooves is connected to the sheath base (8), and an outer side of each of the insertion grooves is connected to the plastic sheath (5).

3. The charging base for the electric vehicle according to claim 1 or 2, wherein an axis of the terminal(7) and an axis of a corresponding one of the insertion grooves (6) coincide with each other.

4. The charging base for the electric vehicle according to claim 1 or 2, wherein the waterproof groove(8b) is matched with the sealing gasket (9), and the sealing gasket(9) is embedded in the waterproof groove(8b).

5. The charging base for the electric vehicle according to claim 1 or 2, wherein a temperature sensor (10) is provided on one side of the jack sockets(2) of the fixing component (11).
